# FASCICULE DE BREVET EUROPEEN

(11) **EP 2 718 120 B1**
(45) Date de publication et mention de la délivrance du brevet: **22.02.2017**
(21) Numéro de dépôt: 12729062.5
(22) Date de dépôt: 06.06.2012
(51) Int. Cl.: B60C 15/00, B60C 15/06

(54) **BOURRELET DE PNEUMATIQUE POUR VEHICULE LOURD DE TYPE GENIE CIVIL**
REIFENWULST FÜR SCHWERLASTFAHRZEUG BAUMASCHINENART
TYRE BEAD FOR HEAVY DUTY CONSTRUCTION VEHICLE

(30) Priorité: 07.06.2011 FR 1154926
(43) Date de publication de la demande: 16.04.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONDU, Lucien, F-63040 Clermont-Ferrand Cedex 9 (FR)
(74) Mandataire: Millanvois, Patrick Jacques Jean
(86) Numéro de dépôt international: PCT/EP2012/060646
(87) Numéro de publication internationale: WO 2012/168270

(56) Documents cités:
- EP-A2- 0 317 488
- JP-A- 61 232 905
- JP-A- 2006 015 951
- US-A- 4 471 828
- US-A- 5 433 257
- US-A1- 2007 113 944

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25".

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement métalliques enrobés d'un matériau polymérique d'enrobage. Les éléments de renforcement métalliques sont sensiblement parallèles entre eux et font, avec la direction circonférentielle, un angle compris entre 85° et 95°. La couche d'armature de carcasse comprend une partie principale, reliant les deux bourrelets entre eux et s'enroulant, dans chaque bourrelet, autour d'une tringle. La tringle comprend un élément de renforcement circonférentiel le plus souvent métallique entouré d'au moins un matériau, de manière non exhaustive, polymérique ou textile. L'enroulement de la couche d'armature de carcasse autour de la tringle va de l'intérieur vers l'extérieur du pneumatique pour former un retournement comprenant une extrémité. Le retournement, dans chaque bourrelet, permet l'ancrage de la couche d'armature de carcasse à la tringle du bourrelet.

L'extrémité du retournement est souvent recouverte, sur ses deux faces respectivement axialement intérieure et axialement extérieure, par un élément de bordage, constitué d'un matériau polymérique de bordage le plus souvent de même composition chimique que le matériau polymérique d'enrobage mais pouvant être différent. L'élément de bordage constitue ainsi une surépaisseur de matériau polymérique d'enrobage à l'extrémité du retournement.

Chaque bourrelet comprend également un élément de remplissage prolongeant radialement vers l'extérieur la tringle. L'élément de remplissage est constitué d'au moins un matériau polymérique de remplissage. L'élément de remplissage peut être constitué d'un empilage dans le sens radial d'au moins deux matériaux polymériques de remplissage en contact suivant une surface de contact coupant tout plan méridien selon une trace méridienne. L'élément de remplissage sépare axialement la partie principale et le retournement.

Un matériau polymérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23°C + ou - 2°C) et d'hygrométrie (50% + ou -5% d'humidité relative), définies par la norme internationale ISO 471. On appelle module d'élasticité à 10% d'allongement d'un matériau polymérique, exprimé en méga pascals (MPa), la contrainte de traction mesurée pour un allongement de 10% de l'éprouvette.

Un matériau polymérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent des variations de courbure combinées avec des variations de tension des éléments de renforcement métalliques de la partie principale et du retournement.

Considérant qu'un bourrelet se comporte mécaniquement comme une poutre en flexion dont les fibres respectivement extérieure et intérieure sont la partie principale et le retournement, le retournement, soumis aux cycles de flexion, subit des déformations de compression, susceptibles d'entraîner sa rupture par fatigue, et donc une diminution de l'endurance du bourrelet et de la durée de vie du pneumatique.

Le document EP 2 216 189 décrit un bourrelet de pneumatique dont l'endurance est améliorée par une réduction des déformations de compression dans le retournement, lors de la flexion du bourrelet sur la jante, en utilisation. Cet objectif est atteint grâce à un retournement tel que la distance entre le retournement et la partie principale décroît continûment, radialement vers l'extérieur, à partir de la tringle, jusqu'à une distance minimale, puis augmente continûment jusqu'à une distance maximale. Le retournement s'étend radialement à l'extérieur du point du retournement correspondant à la distance maximale entre le retournement et la partie principale.

Les cycles de flexion entraînent également des contraintes et déformations dans les matériaux polymériques d'enrobage, de bordage et de remplissage, situés au voisinage immédiat de l'extrémité du retournement.

Plus précisément, les contraintes et déformations, au voisinage immédiat de l'extrémité du retournement, entraînent la propagation des fissures, initiées en extrémité du retournement, plus particulièrement dans le cas d'éléments de renforcement métalliques, susceptibles d'entraîner une diminution de l'endurance du bourrelet et de la durée de vie du pneumatique.

Selon les inventeurs, l'initiation des fissures résulte principalement d'un défaut d'adhésion des extrémités des éléments de renforcement métalliques du retournement avec les matériaux polymériques d'enrobage, de bordage ou de remplissage, en contact avec lesdites extrémités. L'augmentation de température des bourrelets, lors des cycles de flexion, accentue le défaut d'adhésion préexistant sur le pneumatique neuf.

Les fissures se propagent à travers les matériaux polymériques d'enrobage, de bordage et de remplissage et entraînent la dégradation du bourrelet, et donc la déchéance du pneumatique. La vitesse de propagation des fissures dépend d'une part de l'amplitude et de la fréquence des cycles de contraintes et de déformations, d'autre part des rigidités respectives des matériaux polymériques d'enrobage, de bordage et de remplissage, dans la zone de fissuration.

Le document US 3 921 693 a déjà décrit, dans le cas d'un pneumatique à armature de carcasse radiale dont les éléments de renforcement sont métalliques, des bourrelets dont la conception a pour objectif la prévention de fissures en extrémité du retournement. Dans la solution technique proposée, l'extrémité du retournement est recouverte par un matériau polymérique, dont la dureté Shore A est supérieure à celle du ou des matériaux polymériques de remplissage.

Le document US 4 086 948 a également décrit, en vue d'augmenter la durée de vie d'un pneumatique radial pour véhicule lourd, un retournement haut, c'est-à-dire dont l'extrémité est radialement extérieure à la droite passant par les points les plus axialement extérieurs des flancs du pneumatique. De plus, le matériau polymérique d'enrobage des éléments de renforcement métalliques de l'armature de carcasse a une dureté Shore A et un module d'élasticité à 300% d'allongement supérieurs respectivement à la dureté Shore A et au module d'élasticité à 300% d'allongement du matériau polymérique de remplissage.

Le document JP2006015951A divulgue un pneumatique pertinent pour l'invention.

Enfin, le document US 5 056 575 décrit un bourrelet de pneumatique pour véhicule lourd, tel que des camions et des bus, permettant de réduire les déformations et de ralentir la propagation de fissures dans le matériau polymérique au voisinage de l'extrémité du retournement, en vue d'augmenter l'endurance du bourrelet. La solution technique proposée consiste en un bourrelet ayant trois matériaux polymériques de remplissage, dont les modules d'élasticité à 100% d'allongement décroissent lorsqu'on passe du matériau polymérique de remplissage adjacent au retournement et le plus radialement extérieur, au matériau polymérique de remplissage adjacent à la tringle et le plus radialement intérieur.

Les inventeurs se sont donnés pour objectif d'améliorer l'endurance des bourrelets d'un pneumatique radial pour véhicule lourd de type génie civil, en diminuant la fissuration initiée en extrémité de retournement et se propageant à travers les matériaux polymériques d'enrobage, de bordage et de remplissage.

Cet objectif a été atteint, selon l'invention, par :
- un pneumatique pour véhicule lourd de type génie civil comprenant deux bourrelets destinés à entrer en contact avec une jante, une armature de carcasse comprenant au moins une couche d'armature de carcasse constituée d'éléments de renforcement métalliques,
- la couche d'armature de carcasse comprenant une partie principale s'enroulant dans chaque bourrelet, de l'intérieur vers l'extérieur du pneumatique, autour d'une tringle pour former un retournement,
- la distance entre le retournement et la partie principale décroissant continûment, radialement vers l'extérieur, à partir de la tringle, jusqu'à une distance minimale, puis augmentant continûment jusqu'à une distance maximale,
- le retournement comprenant une extrémité recouverte par un élément de bordage constitué d'un matériau polymérique de bordage,
- chaque bourrelet comprenant un élément de remplissage prolongeant radialement vers l'extérieur la tringle et constitué d'au moins un matériau polymérique de remplissage,
- le matériau polymérique de remplissage en contact avec l'élément de bordage ayant un module d'élasticité à 10% d'allongement inférieur au module d'élasticité à 10% d'allongement du matériau polymérique de bordage,
- un élément de transition, constitué d'un matériau polymérique de transition, étant au moins en partie en contact, sur sa face axialement extérieure, avec le matériau polymérique de bordage et, sur sa face axialement intérieure, avec un matériau polymérique de remplissage,
- les extrémités radialement extérieure et radialement intérieure de l'élément de transition étant respectivement radialement extérieure et radialement intérieure à l'extrémité du retournement,
- le module d'élasticité à 10% d'allongement du matériau polymérique de transition est intermédiaire entre les modules d'élasticité à 10% d'allongement respectifs du matériau polymérique de bordage et du matériau polymérique de remplissage avec lequel l'élément de transition est en contact.

Selon l'invention, il est avantageux d'avoir un élément de transition, constitué d'un matériau polymérique de transition, au moins en partie en contact, sur sa face axialement extérieure, avec le matériau polymérique de bordage et, sur sa face axialement intérieure, avec un matériau polymérique de remplissage. En effet, l'adjonction d'un élément de transition entre l'élément de bordage et le matériau de remplissage axialement intérieur à l'extrémité du retournement permet de limiter localement, dans les matériaux polymériques situés au voisinage de l'extrémité du retournement, les niveaux de contraintes et de déformations dont dépend la vitesse de propagation des fissures initiées en extrémité du retournement.

Il est également avantageux d'avoir les extrémités radialement extérieure et radialement intérieure de l'élément de transition respectivement radialement extérieure et radialement intérieure à l'extrémité du retournement. Un positionnement radial de l'extrémité du retournement entre les deux extrémités respectivement radialement extérieure et intérieure de l'élément de transition permet de garantir le contact entre l'extrémité du retournement et l'élément de transition, compte tenu des tolérances de positionnement radial de l'extrémité du retournement inhérentes au procédé de fabrication.

Enfin, le module d'élasticité à 10% d'allongement du matériau polymérique de transition est avantageusement intermédiaire entre les modules d'élasticité à 10% d'allongement respectifs du matériau polymérique de bordage et du matériau polymérique de remplissage avec lequel l'élément de transition est en contact. La décroissance progressive des modules d'élasticité à 10% d'allongement quand on passe du matériau polymérique de bordage au matériau polymérique de transition, puis au matériau polymérique de remplissage permet un gradient décroissant et progressif de rigidités, qui permet de diminuer les contraintes et déformations en extrémité du retournement et, par conséquent, de ralentir la propagation des fissures.

Un module d'élasticité à 10% d'allongement du matériau polymérique de transition apporte un avantage d'autant plus significatif que l'écart entre les modules d'élasticité à 10% d'allongement respectifs du matériau polymérique de bordage et du matériau polymérique de remplissage est important. Dans l'exemple de pneumatique selon l'invention étudié, le module d'élasticité à 10% d'allongement du matériau polymérique de bordage est égal à 1.6 fois le module d'élasticité à 10% d'allongement du matériau polymérique de remplissage.

Selon un mode de réalisation de l'invention, l'épaisseur de l'élément de transition est au moins égale à 0.25 fois la distance entre l'extrémité du retournement et la partie principale. On appelle épaisseur de l'élément de transition, l'épaisseur constante de l'élément de transition mesurée en dehors des zones d'effilement aux extrémités de l'élément de transition. La distance entre l'extrémité du retournement et la partie principale est la distance mesurée, selon la droite passant par l'extrémité du retournement et perpendiculaire à la partie principale, entre la génératrice axialement intérieure des éléments de renforcement du retournement et la génératrice axialement extérieure des éléments de renforcement de la partie principale. Cette épaisseur minimale de l'élément de transition permet d'établir un gradient de rigidités minimum, permettant de diminuer la vitesse de propagation des fissures.

L'épaisseur de l'élément de transition est avantageusement au plus égale à 0.60 fois la distance entre l'extrémité du retournement et la partie principale. En effet, la dissipation thermique du matériau polymérique de transition est supérieure à celle du matériau polymérique de remplissage, du fait de son module d'élasticité à 10% d'allongement plus élevé. Par conséquent, un volume de matériau polymérique de transition trop élevé entraîne une élévation de température du bourrelet dommageable à sa durée de vie, d'où l'importance de limiter l'épaisseur de l'élément de transition à une valeur maximale.

Il est avantageux que la distance entre l'extrémité radialement extérieure de l'élément de transition et l'extrémité du retournement soit au moins égale à 2 fois la distance entre l'extrémité du retournement et la partie principale. Cette distance est mesurée entre la droite, passant par l'extrémité radialement extérieure de l'élément de transition et parallèle à la droite passant par l'extrémité du retournement et perpendiculaire à la partie principale, et la droite passant par l'extrémité du retournement et perpendiculaire à la partie principale. Cette distance minimale garantit la présence de l'élément de transition axialement extérieure à l'extrémité du retournement, dont la position radiale est susceptible de variations compte tenu des tolérances de fabrication.

Il est également avantageux que la distance entre l'extrémité radialement extérieure de l'élément de transition et l'extrémité du retournement soit au plus égale à 4 fois la distance entre l'extrémité du retournement et la partie principale. La portion d'élément de transition, au-delà de cette distance maximale, d'une part accentue la dissipation thermique dans le bourrelet, dommageable au bourrelet, sans être utile pour compenser l'incertitude de positionnement radial de l'extrémité du retournement, d'où un surcoût de matériau polymérique de transition inutile.

Un autre mode de réalisation avantageux de l'invention est d'avoir la distance entre l'extrémité radialement intérieure de l'élément de transition et l'extrémité du retournement au moins égale à 2 fois la distance entre l'extrémité du retournement et la partie principale. Cette distance est mesurée entre la droite, passant par l'extrémité radialement intérieure de l'élément de transition et parallèle à la droite passant par l'extrémité du retournement et perpendiculaire à la partie principale, et la droite passant par l'extrémité du retournement et perpendiculaire à la partie principale. Cette distance minimale permet de garantir une surface de contact minimale entre le retournement et l'élément de transition et de garantir le recouvrement de l'extrémité du retournement, compte tenu des tolérances de positionnement radial de l'extrémité du retournement inhérentes au procédé de fabrication.

Il est encore avantageux d'avoir la distance entre l'extrémité radialement intérieure de l'élément de transition et l'extrémité du retournement au plus égale à 6 fois la distance entre l'extrémité du retournement et la partie principale. En effet, la portion d'élément de transition, au-delà de cette distance maximale, d'une part accentue la dissipation thermique dans le bourrelet, dommageable au bourrelet, d'autre part est inutile à la fois pour assurer l'adhésion entre le retournement et l'élément de transition, et pour compenser l'incertitude de positionnement radial de l'extrémité du retournement, d'où un surcoût de matériau polymérique de transition inutile.

Un mode de réalisation avantageux de l'invention est d'avoir le module d'élasticité à 10% d'allongement du matériau polymérique de transition au moins égal à 0.9 fois et au plus égal 1.1 fois la moyenne arithmétique des modules d'élasticité à 10% d'allongement respectifs du matériau polymérique de bordage et du matériau polymérique de remplissage. Cet intervalle de valeurs pour le module d'élasticité à 10% d'allongement du matériau polymérique de transition garantit un gradient de rigidités entre les mélanges respectifs de bordage, de transition et de remplissage permettant une diminution significative de la vitesse de propagation des fissures, par rapport au bourrelet du pneumatique de référence sans élément de transition, quand les fissures se propagent du matériau polymérique de bordage vers le matériau polymérique de transition, puis vers le matériau polymérique de remplissage.

Avantageusement, la distance maximale entre le retournement et la partie principale est au moins égale à 1.1 fois la distance minimale entre le retournement et la partie principale. Il en résulte que l'élément de remplissage, axialement compris entre le retournement et la partie principale, comprend un rétrécissement entraînant une proximité entre le retournement et la partie principale permettant au retournement de ne pas être mis en compression, lors du roulage du pneumatique.

Il est également avantageux que la distance du point du retournement, positionné à la distance minimale axialement à l'extérieur de la partie principale, à la ligne de référence de la jante soit au moins égale à 1.25 fois et au plus égale à 2.5 fois la distance du point le plus radialement extérieur de la jante à la ligne de référence de la jante, et que la distance du point du retournement, positionné à la distance maximale axialement à l'extérieur de la partie principale, à la ligne de référence de la jante soit au moins égale à 2 fois et au plus égale à 4 fois la distance du point le plus radialement extérieur de la jante à la ligne de référence de la jante. La ligne de référence de la jante correspond usuellement, pour l'homme du métier, au diamètre au seat. La distance du point le plus radialement extérieur de la jante à la ligne de référence de la jante définit la hauteur du crochet de jante. Ces intervalles de positionnement radial des points du retournement respectivement le plus proche et le plus éloigné de la partie principale garantissent une optimisation des tensions et une absence de compression dans le retournement.

Encore avantageusement, chaque bourrelet comprenant un élément de protection prolongeant radialement vers l'intérieur un flanc et un élément de bourrage axialement intérieur à l'élément de protection et au flanc et axialement extérieur au retournement, les éléments de protection et de bourrage étant respectivement constitués d'au moins un matériau polymérique de protection et d'un matériau polymérique de bourrage, le matériau polymérique de bourrage ayant un module d'élasticité à 10% d'allongement inférieur au module d'élasticité à 10% d'allongement du matériau polymérique d'enrobage, un élément de transition, constitué d'un matériau polymérique de transition, est en contact, par sa face axialement intérieure, avec le matériau polymérique d'enrobage de la face axialement extérieure du retournement et, par sa face axialement extérieure, avec le matériau polymérique de bourrage, et le module d'élasticité à 10% d'allongement du matériau polymérique de transition est intermédiaire entre les modules d'élasticité à 10% d'allongement respectifs du matériau polymérique d'enrobage et du matériau polymérique de bourrage. Cet élément de transition permet de diminuer la fissuration initiée sur la face axialement extérieure du retournement et se propageant à travers les matériaux polymériques d'enrobage et de bourrage. Ce gain en fissuration sur la face axialement extérieure du retournement contribue à l'amélioration de l'endurance du bourrelet et à l'augmentation de la durée de vie du pneumatique.

Avantageusement enfin, chaque bourrelet comprenant un élément de remplissage prolongeant radialement vers l'extérieur la tringle, l'élément de remplissage étant formé d'au moins deux matériaux polymériques de remplissage, un premier matériau polymérique de remplissage étant le plus radialement intérieur et en contact avec la tringle, un deuxième matériau polymérique de remplissage étant radialement extérieur au premier matériau polymérique de remplissage et ayant un module d'élasticité à 10% d'allongement inférieur au module d'élasticité à 10% d'allongement du premier matériau polymérique de remplissage, un élément de transition, constitué d'un matériau polymérique de transition, est en contact, par sa face radialement intérieure, avec le premier matériau polymérique de remplissage et en contact, par sa face radialement extérieure, avec le deuxième matériau polymérique de remplissage et le module d'élasticité à 10% d'allongement du matériau polymérique de transition est intermédiaire entre les modules d'élasticité à 10% d'allongement respectifs des premier et deuxième matériaux polymériques de remplissage. Cet élément de transition permet de diminuer la fissuration initiée au niveau de la surface de contact entre un premier matériau polymérique de remplissage le plus radialement intérieur et en contact avec la tringle et un deuxième matériau polymérique de remplissage radialement extérieur au premier matériau polymérique de remplissage. Ce gain en fissuration à l'interface entre les premier et deuxième matériaux polymériques de remplissage contribue à l'amélioration de l'endurance du bourrelet et à l'augmentation de la durée de vie du pneumatique.

Les caractéristiques de l'invention seront mieux comprises à l'aide de la description des figures annexées 1 et 2 :
- la figure 1 présente une vue en coupe dans un plan méridien du bourrelet d'un pneumatique pour véhicule lourd de type génie civil de l'état de la technique.
- la figure 2 présente une vue en coupe dans un plan méridien du bourrelet d'un pneumatique pour véhicule lourd de type génie civil, selon l'invention.

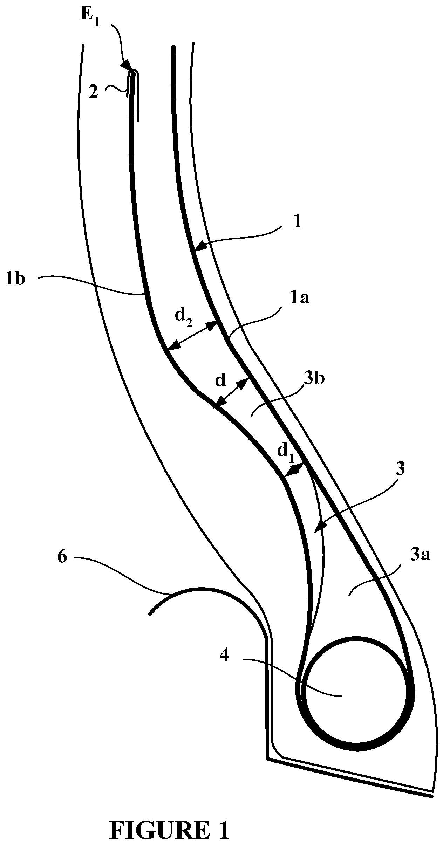

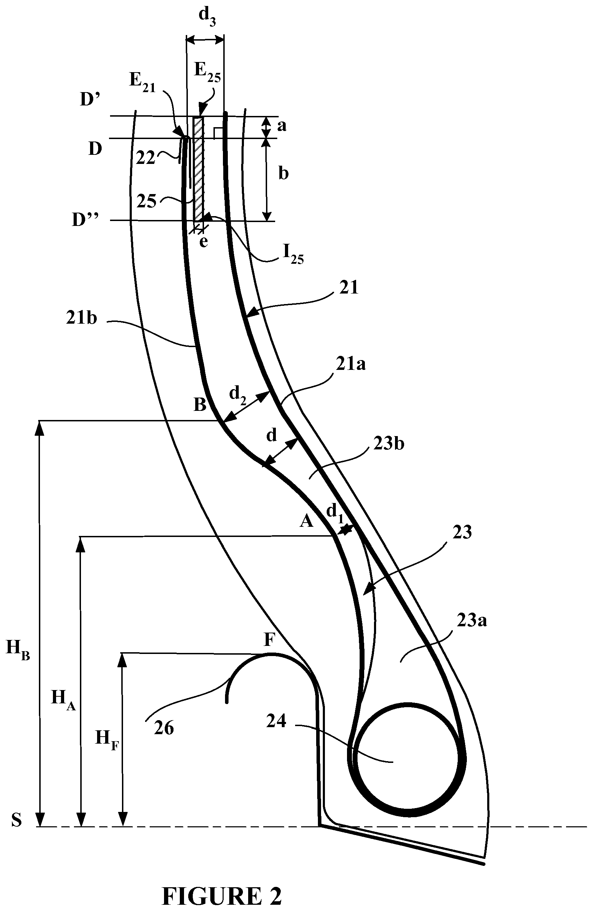

Les figures 1 et 2 ne sont pas représentées à l'échelle pour en faciliter la compréhension.

Sur la figure 1, est représenté un bourrelet de pneumatique pour véhicule lourd de type génie civil de l'état de la technique, comprenant:
- une armature de carcasse, comprenant une seule couche d'armature de carcasse 1 constituée d'éléments de renforcement métalliques, avec une partie principale 1a s'enroulant, de l'intérieur vers l'extérieur du pneumatique, autour d'une tringle 4 pour former un retournement 1b,
- la distance d entre le retournement 1b et la partie principale 1a décroissant continûment, radialement vers l'extérieur, à partir de la tringle 4, jusqu'à une distance minimale d₁, puis augmentant continûment jusqu'à une distance maximale d₂,
- un élément de bordage 2 recouvrant l'extrémité E₁ du retournement 1b, sur ses deux faces respectivement axialement intérieure et axialement extérieure, et constitué par un matériau polymérique de bordage de même composition chimique que le matériau polymérique d'enrobage,
- un élément de remplissage 3 prolongeant radialement vers l'extérieur la tringle 4, formé de deux matériaux polymériques de remplissage, un premier matériau polymérique de remplissage 3a étant radialement extérieur et en contact avec la tringle 4, et un deuxième matériau polymérique de remplissage 3b étant radialement extérieur et en contact avec le premier matériau polymérique de remplissage 3a.

La figure 2 présente un bourrelet de pneumatique pour véhicule lourd de type génie civil, selon l'invention, comprenant :
- une armature de carcasse, comprenant une seule couche d'armature de carcasse 21 constituée d'éléments de renforcement métalliques avec une partie principale 21a s'enroulant, de l'intérieur vers l'extérieur du pneumatique, autour d'une tringle 24 pour former un retournement 21b,
- la distance d entre le retournement 21b et la partie principale 21a décroissant continûment, radialement vers l'extérieur, à partir de la tringle 24, jusqu'à une distance minimale d₁, puis augmentant continûment jusqu'à une distance maximale d₂,
- un élément de bordage 22 recouvrant l'extrémité E₂₁ du retournement 21b, sur ses deux faces respectivement axialement intérieure et axialement extérieure, et constitué par un matériau polymérique de bordage de même composition chimique que le matériau polymérique d'enrobage,
- un élément de remplissage 23 prolongeant radialement vers l'extérieur la tringle 24, formé de deux matériaux polymériques de remplissage, un premier matériau polymérique de remplissage 23a étant radialement extérieur et en contact avec la tringle 24, et un deuxième matériau polymérique de remplissage 23b étant radialement extérieur et en contact avec le premier matériau polymérique de remplissage 23a.
- un élément de transition 25, constitué d'un matériau polymérique de transition, au moins en partie en contact, sur sa face axialement extérieure, avec le matériau polymérique de bordage 22 et, sur sa face axialement intérieure, avec un matériau polymérique de remplissage 23b.

La géométrie du retournement 21b est caractérisée par le point A du retournement 21b, positionné à la distance minimale d₁, axialement à l'extérieur de la partie principale 21a, et à une distance H_{A}, radialement à l'extérieur d'une ligne de référence S de la jante 26, et par le point B du retournement 21b, positionné à la distance maximale d₂, axialement à l'extérieur de la partie principale 21a, et à une distance H_{B}, radialement à l'extérieur d'une ligne de référence S de la jante 26. Les positions respectives des points A et B sont définis par rapport au point F le plus radialement extérieur de la jante 26, positionné à une distance H_{F}, radialement à l'extérieur d'une ligne de référence S de la jante 26.

L'élément de transition 25 a une épaisseur e, représentée schématiquement constante, mais qui, en réalité, présente le plus souvent des effilements aux extrémités E₂₅ et I₂₅. La longueur de l'élément de transition 25 est a + b. L'extrémité E₂₁ du retournement 21b est radialement positionnée entre les extrémités respectivement radialement extérieure E₂₅ et radialement intérieure I₂₅ de l'élément de transition 25.

L'extrémité radialement extérieure E₂₅ de l'élément de transition 25 est située à une distance a de l'extrémité E₂₁ du retournement 21b. La distance a est la distance entre la droite D', passant par l'extrémité radialement extérieure E₂₅ de l'élément de transition 25 et parallèle à la droite D passant par l'extrémité E₂₁ du retournement 21b et perpendiculaire à la partie principale 21a, et la droite D passant par l'extrémité E₂₁ du retournement 21b et perpendiculaire à la partie principale 21a.

L'extrémité radialement intérieure I₂₅ de l'élément de transition 25 est située à une distance b de l'extrémité E₂₁ du retournement 21b. La distance b est la distance entre la droite D", passant par l'extrémité radialement intérieure I₂₅ de l'élément de transition 25 et parallèle à la droite D passant par l'extrémité E₂₁ du retournement 21b et perpendiculaire à la partie principale 21a, et la droite D passant par l'extrémité E₂₁ du retournement 21b et perpendiculaire à la partie principale 21a.

La distance d₃ entre l'extrémité E₂₁ du retournement 21b et la partie principale 21a est la distance mesurée, selon la droite D passant par l'extrémité E₂₁ du retournement 21b et perpendiculaire à la partie principale 21a, entre la génératrice axialement intérieure des éléments de renforcement du retournement 21b et la génératrice axialement extérieure des éléments de renforcement de la partie principale 21 a.

L'invention a été plus particulièrement étudiée dans le cas d'un pneumatique pour véhicule lourd de type dumper de dimension 59/80R63. Selon la « European Tyre and Rim Organisation », les conditions nominales d'utilisation d'un tel pneumatique sont une pression de gonflage égale à 6 bars, une charge statique égale à 99 tonnes et une distance parcourue en une heure comprise entre 16 et 32 km. De plus, la hauteur théorique de section H, au sens de la norme ETRTO, d'un tel pneumatique est égale à 1214 mm.

Le pneumatique 59/80R63 a été conçu conformément à l'invention, telle que schématisée sur la figure 2, c'est-à-dire dans le cas d'un retournement haut, dont le positionnement radial de l'extrémité est au voisinage de la droite axiale passant par les points les plus axialement extérieurs du pneumatique.

Concernant la géométrie du retournement 21b, le point A du retournement 21b est positionné à la distance minimale d₁ égale à 18 mm, axialement à l'extérieur de la partie principale 21a, et à une distance H_{A} égale à 200 mm, radialement à l'extérieur d'une ligne de référence S de la jante 26. Le point B du retournement 21b est positionné à la distance maximale d₂ égale à 27 mm, axialement à l'extérieur de la partie principale 21a, et à une distance H_{B} égale à 390 mm, radialement à l'extérieur d'une ligne de référence S de la jante 26. Les positions respectives des points A et B sont définis par rapport au point F le plus radialement extérieur de la jante 26, positionné à une distance H_{F} égale à 127 mm, radialement à l'extérieur d'une ligne de référence S de la jante 26.

La distance d₃ entre l'extrémité E₂₁ du retournement 21b et la partie principale 21a est égale à 15 mm. L'élément de transition 25, limité par ses extrémités respectivement radialement extérieure E₂₅ et radialement intérieure I₂₅, a une épaisseur e égale 4.5 mm, c'est-à-dire à 0.30 fois la distance d₃. L'extrémité radialement extérieure E₂₅ de l'élément de transition 25 est positionnée à la distance a égale à 45 mm, c'est-à-dire à 3 fois la distance d₃. L'extrémité radialement intérieure I₂₅ de l'élément de transition 25 est positionnée à la distance b égale à 75 mm, c'est-à-dire à 5 fois la distance d₃.

Les modules d'élasticité à 10% d'allongement des matériaux polymériques de bordage 22, de transition 25 et de remplissage 23b sont respectivement égaux à 6 MPa, 4.8 MPa et 3.5 MPa. Par conséquent, le module d'élasticité à 10% d'allongement du matériau polymérique de transition 25 est égal à la moyenne arithmétique des modules d'élasticité à 10% d'allongement respectifs des matériaux polymériques de bordage 22 et de remplissage 23b.

Des simulations de calculs par éléments finis ont été réalisées respectivement sur un pneumatique de référence, tel que représenté sur la figure 1, et un pneumatique selon l'invention, tel que représenté sur la figure 2. Pour le pneumatique de référence, l'allongement du matériau polymérique de remplissage 3b, dans la zone d'extrémité E₁ du retournement 1b, sur la face axialement intérieure du retournement d'armature de carcasse 1b, est égal à 1.4 fois l'allongement du matériau polymérique de bordage 2 en contact, ces allongements étant parallèles au retournement 21b. Par conséquent, lorsqu'une fissure se propage du matériau polymérique de bordage 2 vers le matériau polymérique de remplissage 3b, sa vitesse de propagation dans le matériau polymérique de remplissage 3b augmente du fait d'un plus grand allongement du matériau polymérique de remplissage 3b par rapport au matériau polymérique de bordage 2. Pour le pneumatique selon l'invention, l'allongement du matériau polymérique de transition 25, dans la zone d'extrémité E₂₁ du retournement 21b, sur la face axialement intérieure du retournement, est égal à 0.9 fois l'allongement du matériau polymérique de bordage 22. Par conséquent, lorsqu'une fissure se propage du matériau polymérique de bordage 22 vers le matériau polymérique de transition 25, sa vitesse de propagation dans le matériau polymérique de transition 25 diminue du fait d'un plus faible allongement du matériau polymérique de transition 25 par rapport au matériau polymérique de bordage 22.

L'invention ne doit pas être interprétée comme étant limitée à l'exemple illustré sur la figure 2 mais peut être étendue à d'autres variantes de réalisation, telles que, de manière non exhaustive :
- un matériau polymérique de bordage de composition chimique différente de celle du matériau polymérique d'enrobage,
- une absence d'élément de bordage entraînant un contact direct entre la face axialement extérieure de l'élément de transition et le matériau polymérique d'enrobage de la face axialement intérieure du retournement d'armature de carcasse,
- un élément de transition comprenant plusieurs couches de matériaux polymériques de transition deux à deux en contact et de direction radiale,
- un retournement, dont l'extrémité est radialement positionnée plus proche de la tringle que dans le cas de la figure 2.

## Revendications

1. Pneumatique pour véhicule lourd de type génie civil comprenant deux bourrelets destinés à entrer en contact avec une jante (6, 26), une armature de carcasse comprenant au moins une couche d'armature de carcasse (1, 21) constituée d'éléments de renforcement métalliques, la couche d'armature de carcasse comprenant une partie principale (1a, 21a) s'enroulant dans chaque bourrelet, de l'intérieur vers l'extérieur du pneumatique, autour d'une tringle (4, 24) pour former un retournement (1b, 21b), la distance (d) entre le retournement (1b, 21b) et la partie principale (1a, 21a) décroissant continûment, radialement vers l'extérieur, à partir de la tringle (4, 24), jusqu'à une distance minimale (d₁), puis augmentant continûment jusqu'à une distance maximale (d₂), le retournement (1b, 21b) comprenant une extrémité (E₁, E₂₁) recouverte par un élément de bordage (2, 22) constitué d'un matériau polymérique de bordage, chaque bourrelet comprenant un élément de remplissage (3, 23) prolongeant radialement vers l'extérieur la tringle (4, 24) et constitué d'au moins un matériau polymérique de remplissage (3a, 3b, 23a, 23b), le matériau polymérique de remplissage (3b, 23b) en contact avec l'élément de bordage (2, 22) ayant un module d'élasticité à 10% d'allongement inférieur au module d'élasticité à 10% d'allongement du matériau polymérique de bordage, où un élément de transition (25), constitué d'un matériau polymérique de transition, est au moins en partie en contact, sur sa face axialement extérieure, avec le matériau polymérique de bordage (22) et, sur sa face axialement intérieure, avec un matériau polymérique de remplissage (23b), où les extrémités radialement extérieure (E₂₅) et radialement intérieure (I₂₅) de l'élément de transition (25) sont respectivement radialement extérieure et radialement intérieure à l'extrémité (E₂₁) du retournement (21b) et où le module d'élasticité à 10% d'allongement du matériau polymérique de transition (25) est intermédiaire entre les modules d'élasticité à 10% d'allongement respectifs du matériau polymérique de bordage (22) et du matériau polymérique de remplissage (23b) avec lequel l'élément de transition (25) est en contact.

2. Pneumatique pour véhicule lourd de type génie civil selon la revendication 1, **caractérisé en ce que** l'épaisseur (e) de l'élément de transition (25) est au moins égale à 0.25 fois la distance (d₃) entre l'extrémité (E₂₁) du retournement (21b) et la partie principale (21a).

3. Pneumatique pour véhicule lourd de type génie civil selon l'une quelconque des revendications 1 ou 2, **caractérisé en ce que** l'épaisseur (e) de l'élément de transition (25) est au plus égale à 0.60 fois la distance (d₃) entre l'extrémité (E₂₁) du retournement (21b) et la partie principale (21a).

4. Pneumatique pour véhicule lourd de type génie civil selon l'une quelconque des revendications 1 à 3, **caractérisé en ce que** la distance (a) entre l'extrémité radialement extérieure (E₂₅) de l'élément de transition (25) et l'extrémité (E₂₁) du retournement (21b) est au moins égale à 2 fois la distance (d₃) entre l'extrémité du retournement et la partie principale (21a).

5. Pneumatique pour véhicule lourd de type génie civil selon l'une quelconque des revendications 1 à 4, **caractérisé en ce que** la distance (a) entre l'extrémité radialement extérieure (E₂₅) de l'élément de transition (25) et l'extrémité (E₂₁) du retournement (21b) est au plus égale à 4 fois la distance (d₃) entre l'extrémité du retournement et la partie principale (21a).

6. Pneumatique pour véhicule lourd de type génie civil selon l'une quelconque des revendications 1 à 5, **caractérisé en ce que** la distance (b) entre l'extrémité radialement intérieure (I₂₅) de l'élément de transition (25) et l'extrémité (E₂₁) du retournement d'armature de carcasse (21b) est au moins égale à 2 fois la distance (d₃) entre l'extrémité du retournement et la partie principale (21a).

7. Pneumatique pour véhicule lourd de type génie civil selon l'une quelconque des revendications 1 à 6, **caractérisé en ce que** la distance (b) entre l'extrémité radialement intérieure (I₂₅) de l'élément de transition (25) et l'extrémité (E₂₁) du retournement (21b) est au plus égale à 6 fois la distance (d₃) entre l'extrémité du retournement et la partie principale (21a).

8. Pneumatique pour véhicule lourd de type génie civil selon l'une quelconque des revendications 1 à 7, **caractérisé en ce que** le module d'élasticité à 10% d'allongement du matériau polymérique de transition (25) est au moins égal à 0.9 fois et au plus égal à 1.1 fois la moyenne arithmétique des modules d'élasticité à 10% d'allongement respectifs du matériau polymérique de bordage (22) et du matériau polymérique de remplissage (23b).

9. Pneumatique pour véhicule lourd de type génie civil selon l'une quelconque des revendications 1 à 8, **caractérisé en ce que** la distance maximale (d₂) entre le retournement (21b) et la partie principale (21a) est au moins égale à 1.1 fois la distance minimale (d₁) entre le retournement (21b) et la partie principale (21a).

10. Ensemble monté comprenant un pneumatique pour véhicule lourd de type génie civil selon l'une quelconque des revendications 1 à 9, et une jante (26), le pneumatique étant monté sur la jante (26), et comprenant un point A du retournement (21b), positionné à la distance minimale (d₁), axialement à l'extérieur de la partie principale (21a), et à une distance (H_{A}), radialement à l'extérieur d'une ligne de référence (S) de la jante (26), le point F le plus radialement extérieur de la jante (26) étant positionné à une distance (H_{F}), radialement à l'extérieur d'une ligne de référence (S) de la jante (26), **caractérisé en ce que** la distance (H_{A}) du point A du retournement (21b), positionné à la distance minimale (d₁) axialement à l'extérieur de la partie principale (21a), à la ligne de référence (S) de la jante (26) est au moins égale à 1.25 fois et au plus égale à 2.5 fois la distance (H_{F}) du point F le plus radialement extérieur de la jante (26) à la ligne de référence (S) de la jante (26).

11. Ensemble monté comprenant un pneumatique pour véhicule lourd de type génie civil selon l'une quelconque des revendications 1 à 9 , et une jante (26), le pneumatique étant monté sur la jante (26), et comprenant un point B du retournement (21b), positionné à la distance maximale (d₂), axialement à l'extérieur de la partie principale (21a), et à une distance (H_{B}), radialement à l'extérieur d'une ligne de référence (S) de la jante (26), le point F le plus radialement extérieur de la jante (26) étant positionné à une distance (H_{F}), radialement à l'extérieur d'une ligne de référence (S) de la jante (26), **caractérisé en ce que** la distance (H_{B}) du point B du retournement (21b), positionné à la distance maximale (d₂) axialement à l'extérieur de la partie principale (21a), à la ligne de référence (S) de la jante (26) est au moins égale à 2 fois et au plus égale à 4 fois la distance (H_{F}) du point F le plus radialement extérieur de la jante (26) à la ligne de référence (S) de la jante (26).

## Patentansprüche

1. Luftreifen für Schwerfahrzeug des Hoch- und Tiefbauwesens, der umfasst: zwei Wulste, die dazu bestimmt sind, mit einer Felge (6, 26) in Kontakt zu gelangen, und eine Karkassenbewehrung, die wenigstens eine Karkassenbewehrungsschicht (1, 21) enthält, die aus metallischen Verstärkungselementen gebildet ist, wobei die Karkassenbewehrungsschicht einen Hauptteil (1a, 21a) aufweist, der in jeden Wulst von innerhalb nach außerhalb des Luftreifens um eine Leiste (4, 24) gewickelt ist, um eine Umlenkung (1b, 21b) zu bilden, wobei der Abstand (d) zwischen der Umlenkung (1b, 21b) und dem Hauptteil (1a, 21a) radial nach außen ausgehend von der Leiste (4, 24) bis zu einem minimalen Abstand (d₁) kontinuierlich abnimmt und dann bis zu einem maximalen Abstand (d₂) kontinuierlich zunimmt, wobei die Umlenkung (1b, 21b) ein Ende (E₁, E₂₁) umfasst, das von einem Einfasselement (2, 22) bedeckt ist, das aus einem Polymer-Einfassmaterial gebildet ist, wobei jeder Wulst ein Füllelement (3, 23) aufweist, das die Leiste (4, 24) radial nach außen verlängert und aus mindestens einem Polymer-Füllmaterial (3a, 3b, 23a, 23b) gebildet ist, wobei das mit dem Einfasselement (2, 22) in Kontakt stehende Polymer-Füllmaterial (3b, 23b) einen Elastizitätsmodul bei 10 % Dehnung besitzt, der kleiner als der Elastizitätsmodul bei 10 % Dehnung des Polymer-Einfassmaterials ist, wobei ein Übergangselement (25), das aus einem Polymer-Übergangsmaterial gebildet ist, mit seiner axial äußeren Fläche mit dem Polymer-Einfassmaterial (22) und mit seiner axial inneren Fläche mit einem Polymer-Füllmaterial (23b) zumindest teilweise in Kontakt ist, wobei das radial äußere (E₂₅) und das radial innere (I₂₅) Ende des Übergangselements (25) bezüglich des Endes (E₂₁) der Umlenkung (21b) radial außen bzw. radial innen liegen und wobei der Elastizitätsmodul bei 10 % Dehnung des Polymer-Übergangsmaterials (25) zwischen den jeweiligen Elastizitätsmodulen bei 10 % Dehnung des Polymer-Einfassmaterials (22) und des Polymer-Füllmaterials (23b), mit dem das Übergangselement (25) in Kontakt ist, liegt.

2. Luftreifen für Schwerfahrzeug des Hoch- und Tiefbauwesens nach Anspruch 1, **dadurch gekennzeichnet, dass** die Dicke (e) des Übergangselements (25) wenigstens gleich dem 0,25-fachen Abstand (d₃) zwischen dem Ende (E₂₁) der Umlenkung (21b) und dem Hauptteil (21a) ist.

3. Luftreifen für Schwerfahrzeug des Hoch- und Tiefbauwesens nach einem der Ansprüche 1 oder 2, **dadurch gekennzeichnet, dass** die Dicke (e) des Übergangselements (25) höchstens gleich dem 0,60-fachen Abstand (d₃) zwischen dem Ende (E₂₁) der Umlenkung (21b) und dem Hauptteil (21a) ist.

4. Luftreifen für Schwerfahrzeug des Hoch- und Tiefbauwesens nach einem der Ansprüche 1 bis 3, **dadurch gekennzeichnet, dass** der Abstand (a) zwischen dem radial äußeren Ende (E₂₅) des Übergangselements (25) und dem Ende (E₂₁) der Umlenkung (21b) wenigstens gleich dem 2-fachen Abstand (d₃) zwischen dem Ende der Umlenkung und dem Hauptteil (21a) ist.

5. Luftreifen für Schwerfahrzeug des Hoch- und Tiefbauwesens nach einem der Ansprüche 1 bis 4, **dadurch gekennzeichnet, dass** der Abstand (a) zwischen dem radial äußeren Ende (E₂₅) des Übergangselements (25) und dem Ende (E₂₁) der Umlenkung (21b) höchstens gleich dem 4-fachen Abstand (d₃) zwischen dem Ende der Umlenkung und dem Hauptteil (21a) ist.

6. Luftreifen für Schwerfahrzeug des Hoch- und Tiefbauwesens nach einem der Ansprüche 1 bis 5, **dadurch gekennzeichnet, dass** der Abstand (b) zwischen dem radial inneren Ende (I₂₅) des Übergangselements (25) und dem Ende (E₂₁) der Karkassenbewehrungsumlenkung (21b) wenigstens gleich dem 2-fachen Abstand (d₃) zwischen dem Ende der Umlenkung und dem Hauptteil (21a) ist.

7. Luftreifen für Schwerfahrzeug des Hoch- und Tiefbauwesens nach einem der Ansprüche 1 bis 6, **dadurch gekennzeichnet, dass** der Abstand (b) zwischen dem radial inneren Ende (I₂₅) des Übergangselements (25) und dem Ende (E₂₁) der Umlenkung (21b) höchstens gleich dem 6-fachen Abstand (d₃) zwischen dem Ende der Umlenkung und dem Hauptteil (21a) ist.

8. Luftreifen für Schwerfahrzeug des Hoch- und Tiefbauwesens nach einem der Ansprüche 1 bis 7, **dadurch gekennzeichnet, dass** der Elastizitätsmodul bei 10 % Dehnung des Polymer-Übergangsmaterials (25) wenigstens gleich dem 0,9-fachen und höchstens gleich dem 1,1-fachen arithmetischen Mittelwert der jeweiligen Elastizitätsmodule bei 10 % Dehnung des Polymer-Einfassmaterials (22) und des Polymer-Füllmaterials (23b) ist.

9. Luftreifen für Schwerfahrzeug des Hoch- und Tiefbauwesens nach einem der Ansprüche 1 bis 8, **dadurch gekennzeichnet, dass** der maximale Abstand (d₂) zwischen der Umlenkung (21b) und dem Hauptteil (21a) wenigstens gleich dem 1,1-fachen minimalen Abstand (d₁) zwischen der Umlenkung (21b) und dem Hauptteil (21a) ist.

10. Montierte Anordnung, die einen Luftreifen für ein Schwerfahrzeug des Hoch- und Tiefbauwesens nach einem der Ansprüche 1 bis 9 und eine Felge (26) umfasst, wobei der Luftreifen an der Felge (26) montiert ist und einen Punkt A der Umlenkung (21b) aufweist, der in dem minimalen Abstand (d₁) axial außerhalb des Hauptteils (21a) und in einem Abstand (H_{A}) radial außerhalb einer Bezugslinie (S) der Felge (26) positioniert ist, wobei der radial äußerste Punkt F der Felge (26) in einem Abstand (H_{F}) radial außerhalb einer Bezugslinie (S) der Felge (26) positioniert ist, **dadurch gekennzeichnet, dass** der Abstand (H_{A}) des Punkts A der Umlenkung (21b), der in dem minimalen Abstand (d₁) axial außerhalb des Hauptteils (21a) positioniert ist, zu der Bezugslinie (S) der Felge (26) wenigstens gleich dem 1,25-fachen und höchstens gleich dem 2,5-fachen Abstand (H_{F}) des radial äußersten Punkts F der Felge (26) zu der Bezugslinie (S) der Felge (26) ist.

11. Montierte Anordnung, die einen Luftreifen für ein Schwerfahrzeug des Hoch- und Tiefbauwesens nach einem der Ansprüche 1 bis 9 und eine Felge (26) umfasst, wobei der Luftreifen an der Felge (26) montiert ist und einen Punkt B der Umlenkung (21b) umfasst, der in dem maximalen Abstand (d₂) axial außerhalb des Hauptteils (21a) und in einem Abstand (H_{B}) radial außerhalb einer Bezugslinie (S) der Felge (26) positioniert ist, wobei der radial äußerste Punkt F der Felge (26) in einem Abstand (H_{F}) radial außerhalb einer Bezugslinie (S) der Felge (26) positioniert ist, **dadurch gekennzeichnet, dass** der Abstand (H_{B}) des Punkts B der Umlenkung (21b), der in dem minimalen Abstand (d₂) axial außerhalb des Hauptteils (21a) positioniert ist, zu der Bezugslinie (S) der Felge (26) wenigstens gleich dem 2-fachen und höchstens gleich dem 4-fachen Abstand (H_{F}) des radial äußersten Punkts F der Felge (26) zu der Bezugslinie (S) der Felge (26) ist.

## Claims

1. Tyre for a heavy vehicle of construction plant type comprising two beads intended to come into contact with a rim (6, 26), a carcass reinforcement comprising at least one carcass reinforcement layer (1, 21) made up of metallic reinforcing elements, the carcass reinforcement layer comprising a main part (1a, 21a) wrapped, within each bead, from the inside towards the outside of the tyre, around a bead wire (4, 24) to form a turn-up (1b, 21b), the distance (d) between the turn-up (1b, 21b) and the main part (1a, 21a) decreasing continuously, radially towards the outside, from the bead wire (4, 24), as far as a minimum distance (d₁), then increasing continuously as far as a maximum distance (d₂), the turn-up (1b, 21b) comprising an end (E₁, E₂₁) covered by an edging element (2, 22) made of a polymer edging material, each bead comprising a filling element (3, 23) extending the bead wire (4, 24) radially towards the outside and made of at least one polymer filling material (3a, 3b, 23a, 23b), the polymer filling material (3b, 23b) in contact with the edging element (2, 22) having an elastic modulus at 10% elongation that is lower than the elastic modulus at 10% elongation of the polymer edging material, where a transition element (25), made of a polymer transition material, is at least partially in contact, on its axially outer face, with the polymer edging material (22) and, on its axially inner face, with a polymer filling material (23b), where the radially outer (E₂₅) and radially inner (I₂₅) ends of the transition element (25) are respectively radially on the outside and radially on the inside of the end (E₂₁) of the turn-up (21b) and where the elastic modulus at 10% elongation of the polymer transition material (25) is somewhere between the respective elastic moduluses at 10% elongation of the polymer edging material (22) and of the polymer filling material (23b) with which the transition element (25) is in contact.

2. Tyre for a heavy vehicle of construction plant type according to Claim 1, **characterized in that** the thickness (e) of the transition element (25) is at least equal to 0.25 times the distance (d₃) between the end (E₂₁) of the turn-up (21b) and the main part (21a).

3. Tyre for a heavy vehicle of construction plant type according to either one of Claims 1 or 2, **characterized in that** the thickness (e) of the transition element (25) is at most equal to 0.60 times the distance (d₃) between the end (E₂₁) of the turn-up (21b) and the main part (21a).

4. Tyre for a heavy vehicle of construction plant type according to any one of Claims 1 to 3, **characterized in that** the distance (a) between the radially outer end (E₂₅) of the transition element (25) and the end (E₂₁) of the turn-up (21b) is at least equal to 2 times the distance (d₃) between the end of the turn-up and the main part (21a).

5. Tyre for a heavy vehicle of construction plant type according to any one of Claims 1 to 4, **characterized in that** the distance (a) between the radially outer end (E₂₅) of the transition element (25) and the end (E₂₁) of the turn-up (21b) is at most equal to 4 times the distance (d₃) between the end of the turn-up and the main part (21a).

6. Tyre for a heavy vehicle of construction plant type according to any one of Claims 1 to 5, **characterized in that** the distance (b) between the radially inner end (I₂₅) of the transition element (25) and the end (E₂₁) of the turn-up of carcass reinforcement (21b) is at least equal to 2 times the distance (d₃) between the end of the turn-up and the main part (21a).

7. Tyre for a heavy vehicle of construction plant type according to any one of Claims 1 to 6, **characterized in that** the distance (b) between the radially inner end (I₂₅) of the transition element (25) and the end (E₂₁) of the turn-up (21b) is at most equal to 6 times the distance (d₃) between the end of the turn-up and the main part (21a).

8. Tyre for a heavy vehicle of construction plant type according to any one of Claims 1 to 7, **characterized in that** the elastic modulus at 10% elongation of the polymer transition material (25) is at least equal to 0.9 times and at most equal to 1.1 times the arithmetic mean of the respective elastic moduluses at 10% elongation of the polymer edging material (22) and of the polymer filling material (23b).

9. Tyre for a heavy vehicle of construction plant type according to any one of Claims 1 to 8, **characterized in that** the maximum distance (d₂) between the turn-up (21b) and the main part (21a) is at least equal to 1.1 times the minimum distance (d₁) between the turn-up (21b) and the main part (21a).

10. Mounted assembly comprising a tyre for a heavy vehicle of construction plant type according to any one of Claims 1 to 9 and a rim (26), the tyre being mounted on the rim (26) and comprising a point A of the turn-up (21b), which point is positioned at the minimum distance (d₁) axially on the outside of the main part (21a) and at a distance (H_{A}) radially on the outside of a reference line (S) of the rim (26), the radially outermost point F of the rim (26) being positioned at a distance (H_{F}) radially on the outside of a reference line (S) of the rim (26), **characterized in that** the distance (H_{A}) from the point A of the turn-up (21b), which point is positioned at the minimum distance (d₁) axially on the outside of the main part (21a), to the reference line (S) of the rim (26) is at least equal to 1.25 times and at most equal to 2.5 times the distance (H_{F}) from the radially outermost point F of the rim (26) to the reference line (S) of the rim (26).

11. Mounted assembly comprising a tyre for a heavy vehicle of a construction plant type according to any one of Claims 1 to 9 and a rim (26), the tyre being mounted on the rim (26), and comprising a point B of the turn-up (21b), which point is positioned at the maximum distance (d₂) axially on the outside of the main part (21a) and at a distance (H_{B}) radially on the outside of a reference line (S) of the rim (26), the radially outermost point F of the rim (26) being positioned at a distance (H_{F}) radially on the outside of a reference line (S) of the rim (26), **characterized in that** the distance (H_{B}) from the point B of the turn-up (21b), which point is positioned at the minimum distance (d₂) axially on the outside of the main part (21a), to the reference line (S) of the rim (26) is at least equal to 2 times and at most equal to 4 times the distance (H_{F}) from the radially outermost point F of the rim (26) to the reference line (S) of the rim (26).
